# EUROPEAN PATENT APPLICATION

(11) **EP 2 511 427 A1**
(43) Date of publication of application: **17.10.2012**
(21) Application number: 10835516.5
(22) Date of filing: 10.12.2010
(51) Int. Cl.: E02B 17/02, G01W 1/02

(54) **MEASUREMENT PLATFORM TO BE INSTALLED IN WATER**

(30) Priority: 11.12.2009 ES 200902311
(71) Applicant: Grupo De Ingenieria Aceanica, S.L., 38390 - Santa Ursula, Tenerife - Islas Canarias (ES)
(72) Inventor: DEL CAMPO Y RUIZ DE ALMODOVAR, Cesar, 11500 El Puerto de Santa Maria (Cádiz) (ES)
(74) Representative: Garcia-Cabrerizo y del Santo, Pedro Maria
(86) International application number: PCT/ES2010/000504
(87) International publication number: WO 2011/070193

(57) **Abstract**

Measurement platform for installing in water, very light and easy to transport, which comprises a foundation of improved suction anchor type constituting the platform base. It is driven into the seabed by the pressure difference between outside and inside, and by reversing the pressure gradient it can be extracted for reutilization. The measurement platform also has a series of telescopically connected tubes, a house located on these tubes containing the devices, a vertical shaft wind turbine for powering the assembly, a device for transmitting data (wi-max or equivalent) to the on-land station, a Doppler laser anemometer, security cameras and the terminal of a Doppler current meter.

All data recorded by the devices as well as pictures from security cameras will be continuously sent to the on-land station. Thus the security of the facility is increased, and possible sabotages are forecasted.

## Description

### Technical field of the invention

The present invention falls within the sector of measurement towers, more specifically, measurement towers for installing in water.

The invention relates to a platform wherein devices for measuring renewable resources from sea and inland waters, as well as ocean dynamics parameters required for carrying out installation projects of production devices at the sea.

### Background of the Invention

Currently it is known that there is a need to use the sea for providing food, energy and water to the population, since the land does not have enough capacity to meet these needs.

For this purpose, a variety of devices for offshore installation capable of producing these resources has been investigated.

All these facilities or devices depend on the fact of having to be located in the sea at locations that are suitable for both the work for which these will be installed and the foundation desired to be carried out. It is therefore required to have a measurement data history on meteorological conditions in the locations wherein these are desired to be installed.

So far all facilities located at the sea have done this using anyone of these two methods. The first is driven into the seabed a large diameter pile (monopile) on which a tower for holding the anemometers is placed, and the second is built on land a tripod formed by three large concrete footings with an adequate weight for the marine deep and climate, but generally greater than 50 Tons each of which is embedded into a lattice tower for supporting the anemometers.

Both are solutions that require specific devices for its transportation and installation, of which there are only a few units operating in the world, whereby in addition of its operation costs those of mobilization and demobilization, from its port of origin to the installation site have to be added, and these further require suitable weather conditions and involve complex administrative procedures, requiring restoring the location to the situation prior to the installation after being used. This involves cutting the monopile at the same level as the bottom (since extracting it from the bottom is not possible) by using thermal lances operated by very specialized divers, which increases even more the cost of the method. The removal thereof, built with the tripod, requires the same means for being removed as for being use, not being, in general, reusable.

Accordingly, these are very expensive methods that require prior its installation extended, complex and therefore expensive previous theoretical studies in order to decide the installation site, the provided data bring confirmed with actual measurements *in-situ,* which supposes an essential requirement for obtaining the project financing.

Consequently, the total costs of installation, operation and removal, after two years of required measurement, generally exceed four million of Euros and become a limiting factor for further investigation and location selection based on the analysis of alternatives.

Additionally anemometers and devices thus installed can be easily sabotaged and therefore require constant vigilance.

Another added problem is the difficulty for installing the devices for obtaining marine climate data, and the unreliability thereof due to the natural disturbances introduced by the own foundations.

Therefore, the present invention intends to describe a measurement platform for solving in an economically viable manner the following technical problems:
● Obligation of dock manufacturing, if the solution is a tripod and using specific and expensive means for its installation in both cases.
● Complex transfer to the final location.
● Insecure and very expensive system for fixing to the bottom.
● Problems of sabotaging the devices.
● Difficulties for installing systems for producing and storing the energy required in order to operate the devices and the buoyage.
● Limitations and difficulties for installing the system for transmitting the obtained data to land and in real time.
● Making reusable the foundations and structures.
● Reducing costs so that it is possible to select the best location possible by analyzing the existing alternatives.
● Do not disturb the natural environment in order to make the obtained data on marine climate reliable.
● Allowing the installation of devices for obtaining data needed for conducting Environmental Impact Assessment.

### Description of the invention

The measurement platform object of the present invention is very light. Its dimensions and weight allow it to be road transported with a normal trailer and setting it afloat with any port crane or with a normal car crane.

Its transfer to the final location in the water will be carried out using a trailer.

The platform comprises an improved suction anchor foundation constituting the platform base. This is driven into the seabed by the pressure difference between outside and inside, and by reversing the pressure gradient it can be extracted for reutilization. In the detailed description of the invention this will be explained with more detail.

The Measurement platform also has a series of telescopically connected tubes, a house located on these tubes containing the device, a vertical shaft wind turbine for powering the assembly, a device for transmitting data in real time (wi-max or equivalent) to the on-land station, a Doppler laser anemometer and security cameras.

A Doppler laser anemometer is used for avoiding sabotages, since at sea repairs are more difficult and costly. Therefore, this anemometer is digital and has no housings, easy to break in a malicious way, since it uses a laser that is split and sent to the anemometer, and feedback of which decreases by the amount of air molecules in the detector, wherein the difference between the relative radiation of the laser in the anemometer and the radiation feedback, is compared for determining the speed of air molecules which enables measuring the wind speed with great accuracy and without risks of sabotage.

Among the devices a Doppler current meter will be also installed, which is an instrument capable of measuring the speed of water currents. It also registers its direction, depth and angle from the vertical, water temperature, pressure and conductivity.

All data recorded by the devices as well as pictures from security cameras will be continuously sent to the on-land station. Thus the security of the facility is increased, and possible sabotages are forecasted.

Addressing the problems mentioned in the previous section, the solution that has been developed and which protection is requested has the following advantages over that existing in the state of the art:
● On-land and mass production manufacturing.
● Ease for transporting to the port by truck.
● Lightweight, easy launching.
● Reusable.
● Easy and safe transfer by towing it to the final location, because of its telescopic structure and lightness.
● Very sophisticated and highly reliable system for fixing to the bottom.
● Transferring measurement data in real time and with reliability.
● Security cameras with images in the on-land station in real time.

### Description of the figures

In order to complete the description being made and for helping to a better understanding of the features of the invention, a set of drawings is accompanied, wherein with an illustrative and not limitative manner the following has been represented:
Figure 1: Measurement platform assembly

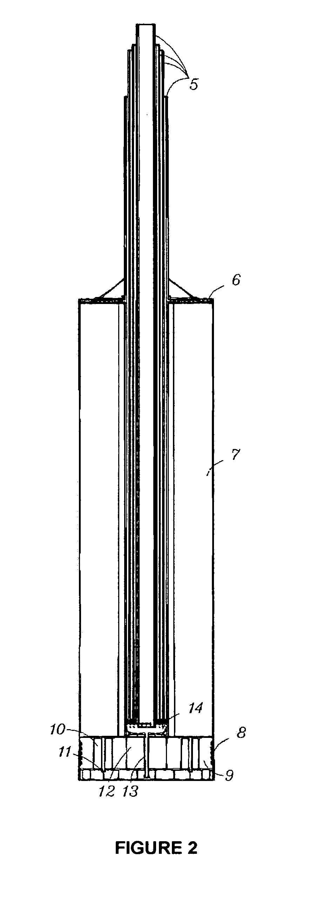

Figure 2: Sectional view of the measurement platform to device housing

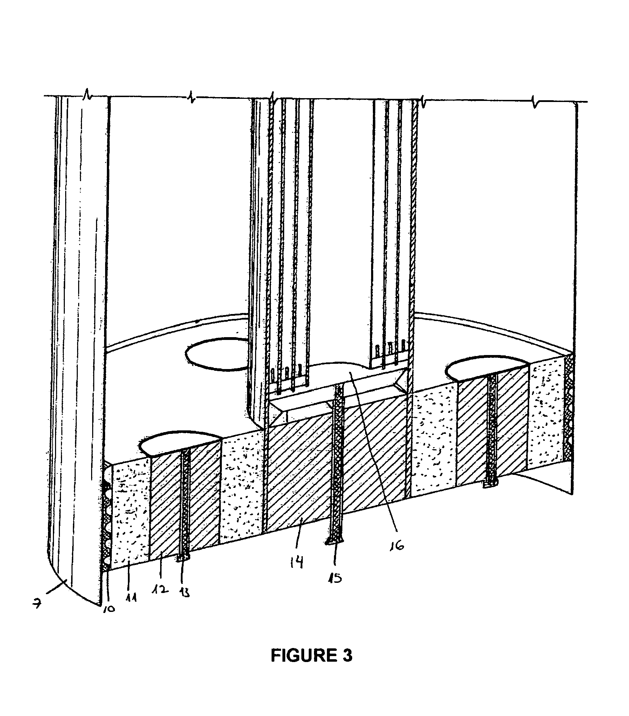

Figure 3: Detail section of the foundation

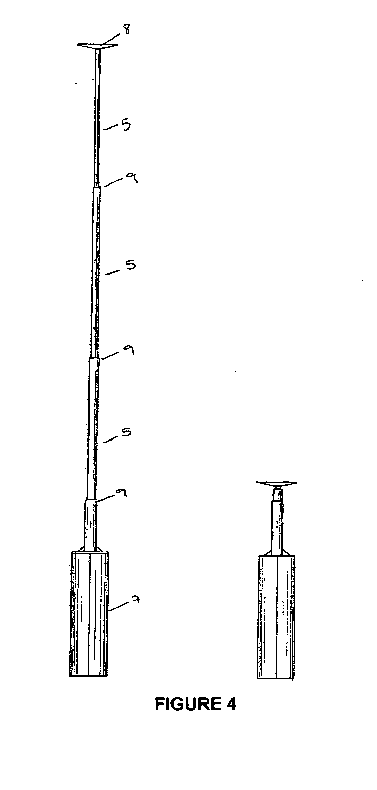

Figure 4: Platform with unfolded and folded tubes

A list of references used in the figures is provided bellow:
(1) Vertical shaft wind turbine
(2) Doppler Laser Anemometer (Lidar)
(4) Device housing
(5) Telescopic Tubes
(6) Bell cover
(7) Bell
(8) House floor
(9) Connections between pipes
(10) O-ring
(11) Foundations
(12) Guide ballast valve
(13) Ballast Valves
(14) Guide balancing valve
(15) Balancing valve
(16) Support joint
(17) Holes for hoses

### Detailed description of the invention

In order to achieve a better understanding of the invention, the structure of the measurement platform as well as the method for fixing to the floor is going to be described below based on the presented figures.

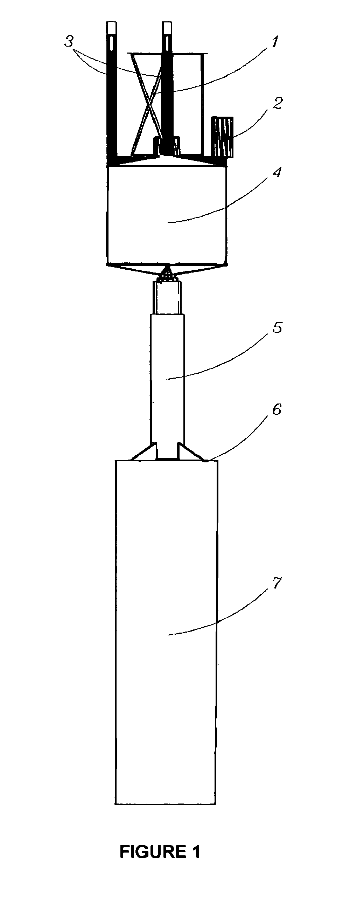

As shown in Figure 1, the measurement platform comprises, from its highest part to the foundations, a vertical shaft wind turbine (1) for powering the assembly, a device for transmitting data (wi-max or equivalent) to the on-land station, a Doppler laser anemometer (2) and security cameras.

All of this rests on a device housing (4) inside of which all devices required to take measures, including the terminals of a Doppler current meter, are housed.

The base or floor of the device housing (8) is supported on a telescopic tube column (5), so that it may easily move upward or downward.

These tubes (5) at their lower part rest on a foundation plate or shoe (11) within an outer cylinder usually made of steel and with sharp base, so-called bell (7). At their top, the bell has a cover (6) with four holes (17) for installing the hoses.

The foundation is of the type of improved suction anchor. The suction anchor mechanism consists of driving a cylinder or bell (7) into the ground by creating vacuum therein, and because of the pressure difference it is introduced into the soil. This only works well if the soil is impermeable, and avoids the water inlet into the cylinder.

For being able of installing it into both impermeable soils, clay type, and into permeable soils (gravel, sand,...) the design has been improved, based on the same principle of being driven by pressure difference.

In general, the system consists of placing inside a bell a "plug" capable of moving inside the bell (7) in the same way as a syringe plunger would do.

Thus, this "plug" has an extra-heavy concrete shoe constituting the foundation plate (11). This foundation plate (11) can slide inside the bell (7), thanks to a variable geometry O-ring (10) which allows the movement to be leakproof.

The foundation plate (11) has four cylindrical holes through which some guides (12) for ballast valves (13) are inserted. At the center of the foundation plate (11) is a cylindrical hole larger in diameter than the previous ones, through which the telescoping tubes (5) will be inserted, as well as a guide (14) for a balancing valve (15).

As regards the method for fixing the bell to the seabed, it would work as follows: the platform is inserted in the water with the foundation (11) located at the bottom of the bell (7), and it is immersed, flooding the necessary part through ballast valves (13) until it rests on the ground. As in the bell cover (6) are the holes (17) for the hoses reaching the surface and emerging above the sea level, the inside of the bell (7) will always be at atmospheric pressure, and if the pressure wants to further decrease in order to increase the gradient between the exterior and interior, a pump is thus connected and the air is extracted from inside the bell (7) and the ballast water. When the shoe rests on the bed the balancing valve (15) is opened allowing permeated water between the interior of the telescoping tubes (5), until reaching a height therein that compensates for the sub-pressure.

Because of the pressure difference between the bell cover (6), which resists the atmospheric pressure plus the pressure being exerted thereto by the water column above it and the vacuum therein, the bell (7) is being driven into the ground.

The device housing (4) is designed to be watertight and thus remaining afloat during the immersion process of the bell (7). In this process the movement of the tubes (5), greater than their weight, will cause these to be unfolded as the bell (7) is immersed and driven. For this purpose, at the joint of the last tube to the base of the device housing (8) there is a valve that allows the outlet of the inner air, and which avoids the inlet of external water. Due to the balancing valve (15) and the sub-pressure, the water introduced into the tubes (5) facilitates and promotes process for unfolding the tubes (5). Finally, under pressure water has to be introduced inside the tubes (5) in order to complete and fix the telescopic lifting process to lift the house (4) and the devices contained therein, to the operational height, always above the maximum wave expected.

In case the measurement tower is desired to be demounted, reversing the pressure gradient and removing the bell (7) and folding the tubes (5) for reutilization would be enough.

The weight of the tubes (5), when the tubes (5) are not unfolded, compresses the support joint (16) and makes it watertight.

This system is specifically designed for use as a measurement tower for renewable resources from sea and inland waters, and for knowing their respective climates and parameters required for performing the mandatory environmental impact assessments, but its extension to other industrial fields that require similar characteristics is not discarded.

## Claims

1. Measurement platform for installing in water, suitable for its installation both in impermeable and permeable soil beds, having a series of devices installed for collecting data in the location and sent it to an on-land station **characterized in that** its fixing to the ground is performed by using a foundation of the suction anchor type having at its base a foundation plate or shoe (11) equipped with a variable geometry O-ring (10), which may slide inside a cylinder or bell (7), which in turn has at its center a series of telescoping tubes (5) on which a device housing (4) is placed, which is joined to the innermost tube of the series, being able of easily moving up and down, keeping it during normal operation at a height higher than the maximum wave expected.

2. Measurement platform for installing in water according to claim 1 **characterized in that** the device housing (4) is designed to be watertight and therefore remains afloat during the immersion of the bell (7).

3. Measurement platform for installing in water according to claim 2 **characterized in that** on the device housing (4) a vertical shaft wind turbine (1) for powering the assembly, a device for transmitting data in real time (wi-max equivalent) to the on-land station, a Doppler laser anemometer (2) and security cameras are placed, and inside the house is the terminal of a Doppler current meter and all other devices necessary for taking measurements.

4. Measurement platform for installing in water according to claim 1 **characterized in that** the foundation plate (11) has four cylindrical holes through which guides (12) for ballast valves (13) are inserted, and at the center of the foundation plate (11) is a cylindrical hole larger in diameter than the previous ones, through which the telescoping tubes (5) will be inserted, and a guide (14) for a balancing valve (15).

5. Water installation of the measurement platform described in the preceding claims **characterized in that** for fixing the bell (7) to the seabed the platform is introduced in the water with the foundation (11) located at the bottom of the bell (7), and it is immersed, flooding the necessary part using the ballast valves (13), until it rests on the ground; a pump is then connected, and the air is extracted from inside the bell (7) and ballast water; when the shoe (11) is placed on the bed the balancing valve (15) is opened allowing the water inlet within the telescopic tubes (5), until reaching a height that compensates for the sub-pressure, and because of the pressure difference existing between the bell cover (6), which resists the atmospheric pressure plus the pressure being exerted thereto by the water column above it and the vacuum therein, the bell (7) is being driven into the ground, in this process, the tubes (5) are unfolded as the bell (7) is immersed and driven, for this purpose, at the joint of the last tube to the base (8) of the device housing (4) there is a valve that allows the outlet of the inner air, and which avoids the inlet of external water; finally under pressure water is introduced inside the tubes (5) in order to complete and fix the telescopic lifting process until lifting the house (4) and the devices contained therein, to the operational height, always above the maximum wave expected.

6. Water installation of the measurement platform according to claim 5 **characterized in that** the weight of the tubes (5), when the tubes (5) are not unfolded, compresses the support joint (16) and makes it watertight.

7. Water installation of the measurement platform according to claim 5 **characterized in that** in case the measurement tower is desired to be demounted, the pressure gradient is reversed and the bell (7) removed, and the tubes (5) are folded for being reused.

## Amended claims

### Amended claims under Art. 19.1 PCT

**1.** Measurement platform for installing in water, suitable for its installation both in impermeable and permeable soil beds, having a series of devices installed for collecting data in the location and sent it to an on-land station **characterized in that** its fixing to the ground is performed by using a foundation of the suction anchor type having at its base a foundation plate or shoe (11) equipped with a variable geometry O-ring (10), which may slide inside a cylinder or bell (7), which in turn has at its center a series of telescoping tubes (5) on which a device housing (4) is placed, which is joined to the innermost tube of the series, being able of easily moving up and down, keeping it during normal operation at a height higher than the maximum wave expected, and wherein the foundation plate (11) of the measurement platform has four cylindrical holes through which guides (12) for ballast valves (13) are inserted, and at the center of the foundation plate (11) there is a cylindrical hole larger in diameter than the previous ones, through which the telescoping tubes (5) will be inserted, and a guide (14) for a balancing valve (15).

**2.** Measurement platform for installing in water according to claim 1 **characterized in that** the device housing (4) is designed to be watertight and therefore remains afloat during the immersion of the bell (7).

**3.** Measurement platform for installing in water according to claim 2 **characterized in that** on the device housing (4) a vertical shaft wind turbine (1) for powering the assembly, a device for transmitting data in real time (wi-max equivalent) to the on-land station, a Doppler laser anemometer (2) and security cameras are placed, and inside the house is the terminal of a Doppler current meter and all other devices necessary for taking measurements.

**4.** Water installation of the measurement platform described in the preceding claims **characterized in that** for fixing the bell (7) to the seabed the platform is introduced in the water with the foundation (11) located at the bottom of the bell (7), and it is immersed, flooding the necessary part using the ballast valves (13), until it rests on the ground; a pump is then connected, and the air is extracted from inside the bell (7) and ballast water; when the shoe (11) is placed on the bed the balancing valve (15) is opened allowing the water inlet within the telescopic tubes (5), until reaching a height that compensates for the sub-pressure, and because of the pressure difference existing between the bell cover (6), which resists the atmospheric pressure plus the pressure being exerted thereto by the water column above it and the vacuum therein, the bell (7) is being driven into the ground, in this process, the tubes (5) are unfolded as the bell (7) is immersed and driven, for this purpose, at the joint of the last tube to the base (8) of the device housing (4) there is a valve that allows the outlet of the inner air, and which avoids the inlet of external water; finally under pressure water is introduced inside the tubes (5) in order to complete and fix the telescopic lifting process until lifting the house (4) and the devices contained therein, to the operational height, always above the maximum wave expected.

**5.** Water installation of the measurement platform according to claim 5 **characterized in that** the weight of the tubes (5), when the tubes (5) are not unfolded, compresses the support joint (16) and makes it watertight.

**6.** Water installation of the measurement platform according to claim 5 **characterized in that** in case the measurement tower is desired to be demounted, the pressure gradient is reversed and the bell (7) removed, and the tubes (5) are folded for being reused.

Statement under Art. 19.1 PCT
The following amendments have been made to the claims:
● The characteristics of initial claim 4 have been included in claim 1.
● Consequently, initial claim 4 has been removed.
